Europäisches Patentamt

European Patent Office

Office européen des brevets

(11) Publication number: **0 432 322 A1**

## EUROPEAN PATENT APPLICATION

(21) Application number: 89312795.1

(22) Date of filing: 07.12.89

(51) Int. Cl.5: **H02K 15/00, H02K 15/14, H02K 5/18**

(43) Date of publication of application:
**19.06.91 Bulletin 91/25**

(84) Designated Contracting States:
**AT BE DE ES FR IT NL SE**

(71) Applicant: **Tait, James Kenneth
4 Garners End Chalfont St. Peter
Gerrards Cross Buckinghamshire SL9
0HE(GB)**

(72) Inventor: **Tait, James Kenneth
4 Garners End Chalfont St. Peter
Gerrards Cross Buckinghamshire SL9
0HE(GB)**

(74) Representative: **Fry, Alan Valentine
FRY HEATH & CO. St. Georges House 6
Yattendon Road
Horley Surrey RH6 7BS(GB)**

(54) **Electrical motors.**

(57) A method of removing and replacing a stator from its operative position in substantial full surface contact with the internal surface of a casing of an electric motor. The method comprises the steps of securing to the casing exterior along a line extending longitudinally of the casing one or more protrusions of metallic material, splitting the casing by a cutting procedure along the aforesaid line thereby to cause the cut edges to separate to enable the stator to be released from the casing, locating a fresh or repaired stator within the casing, and re-assembling the casing by drawing the split edges together and securing the same firmly to locate the stator within the casing.

FIG. 1

## ELECTRICAL MOTORS

This invention relates to electrical motors.

More especially, but not exclusively, the invention relates to heavy duty electric motors which are mechanically coupled to machinery in use and are not readily serviceable in situ. Such electric motors are used in deep mining workings and other similar environments.

Hitherto, failure of such an electric motor results in a need mechanically to de-couple the motor from machinery driven thereby, e.g. a pump, fan, cutter or the like, and to disconnect the motor from its electrical power supply. De-coupling of the electric motor and its disconnection from the respective power supply must normally be carried out by skilled personnel.

In practice, it has been found that faults occurring in stators of electric motors represent a frequent cause of motor failure. To replace in situ a stator of a conventional electric motor in which the stator is tightly retained within the motor casing is practically impossible. A failed motor is, therefore, usually removed from its operational site and taken to a service workshop for repair or servicing. This procedure results in considerable loss of production time. Even if a spare motor is available in situ the alignment of the replacement motor; the mechanical coupling; and the connection of the motor to the appropriate power supply, can take a considerable time to accomplish. Thus, any improvement in motor design which reduces down-time following failure represents a significant saving in operation costs.

One such improved design is disclosed in European Patent Application 0124973. This Application describes a "loose core motor" in which the stator is mounted for sliding movement between a series of axially extending bars positioned between the stator and motor casing such that the stator can readily be removed on removal of an end cover of the motor. Whereas such a motor is well suited for uses where continuous motor operation is not a requirement, problems have occurred when such a motor is operated for periods in excess of an hour or two because of limited heat transfer from the motor interior to the atmosphere.

It is an object of the present invention to reduce the "down-time" of electric motors pursuant to a stator failure whilst alleviating the heat transfer problem referred to in the preceding paragraph.

According to the present invention in one aspect, there is provided a casing for an electric motor which is split longitudinally to facilitate access to the casing interior.

According to the present invention in another aspect there is provided an electric motor including a cylindrical casing which encompasses and lies substantially in full surface contact with a stator of the motor, the casing being split longitudinally along a line extending longitudinally of the casing, and the casing edges along this split line being selectively moved into contact or close proximity with one another to define a substantially closed cylinder or released from such contact or close proximity to facilitate access to the casing interior and/or components located therein.

According to the present invention in a further aspect, there is provided a method of removing and replacing a stator from its operative position in substantial full surface contact with the internal surface of a casing of an electric motor, which method comprises the steps of securing to the casing exterior along a line extending longitudinally of the casing one or more protrusions of metallic material, splitting the casing by a cutting procedure along the aforesaid line thereby to cause the cut edges to separate to enable the stator to be released from the casing, locating a fresh or repaired stator within the casing, and re-assembling the casing by drawing the split edges together and securing the same firmly to locate the stator within the casing.

The split edges may be secured by bolts or the like passing through bores formed in the or each projection.

The stator may be provided with electrical connections positioned within the casing which can readily be disconnected when the casing is removed. The stator may be provided with electrical connections which slide into contact with the stator as the stator is moved fully into its operative position. Both arrangements enable the stator to be removed without disconnecting externally mounted power supply connections which are conventionally connected to a terminal box mounted on the exterior of the casing.

The open ends of the cylindrical casing are preferably closed by means of end covers formed with annular spigots which protrude into and engage internal mating surfaces of the casing. The mating surfaces of the casing may each taper inwardly at a shallow angle towards the respective casing open end, the angle of incline preferably being of the order of between 3° and 5°. The mating face of the annular spigot of each end cover may be formed with a taper complimentary to that of the respective casing end, the arrangement being such that as the longitudinally split edges of the casing are drawn together, so the end covers are drawn inwardly towards the casing interior firmly to secure the same.

As will be appreciated, electric motors in accordance with the invention, enable a stator in full heat transfer contact with the motor casing to be removed for repair or replacement without the use of skilled labour. Furthermore, such stators can be removed and installed in a relatively short time period without mechanically de-coupling the motor from associated machinery and without disconnecting externally connected electrical power supply cables. Thus, the down time of an electric motor in the event of a stator fault can be limited to a few minutes provided that a replacement stator is available for immediate installation.

An electric motor in accordance with the invention has the added advantage that the need to store complete replacement motors is largely negated since only spare stators are required to deal with the majority of motor failures.

According to the present invention in a still further aspect, there is provided an end cover for an electrical motor which includes an annular outwardly tapered spigot which protrudes into an open end of a motor to engage an internal mating surface thereof.

The invention has application to both alternating current and direct current electric motors.

The invention will now be described by way of example with reference to the accompanying diagrammatic drawings in which:

Figure 1 is a plan view of a casing of an electric motor modified in accordance with the invention;

Figure 2 is an end view to an enlarged scale of a section of the casing illustrated in Figure 1;

Figure 3 is a plan view of a shim forming part of the assembled casing; and

Figures 4 and 5 are respectively sections taken through a modified casing and end cover in accordance with the invention.

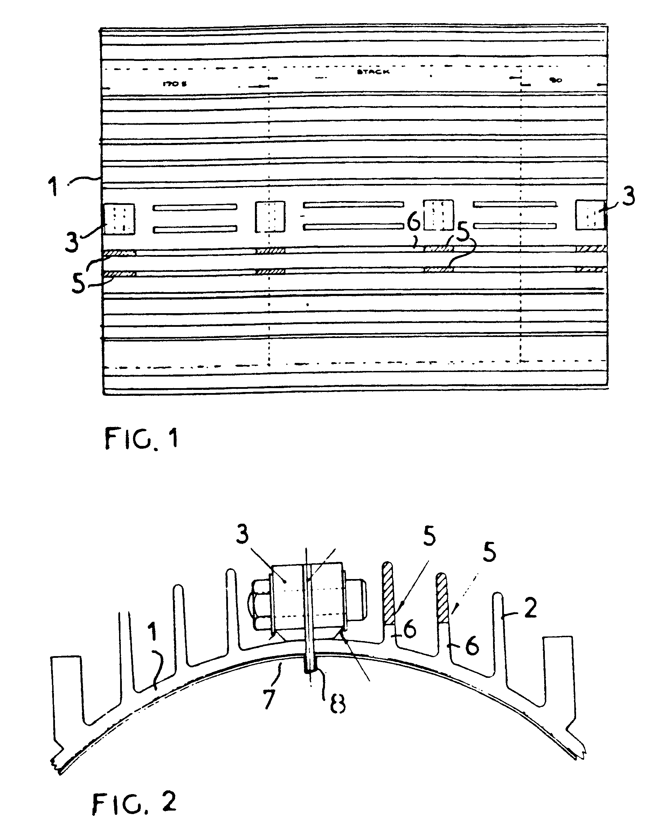

The apparatus illustrated in Figures 1 and 2 includes a cylindrical casing 1 formed on its outer periphery with a plurality of cooling fins 2. A stator (not shown) is conventionally mounted within the housing with its outer surface substantially fully in contact with the casing interior for efficient transfer of heat from the motor interior tc the atmosphere.

In a conventional motor, the casing is formed in one part with the stator firmly located therein by a procedure which involves heating the casing to expand the same, siting the stator within the casing, and allowing the casing to cool. This method of securing the stator within the casing is advantageous in that the stator is firmly located and efficiently cooled during operation but is disadvantageous when it is necessary to remove the stator for repair or replacement. To effect this removal requires the motor to be removed and taken to a service workshop for repair or servicing. As mentioned previously, this results in considerable loss of production time.

In accordance with the present invention, if a conventional electric motor fails in service, the following procedure is followed by which the failed stator can be removed from its casing in situ without the need for disconnection from either the machinery being driven by the motor or the power supply to the motor.

Firstly, a series of metallic blocks 3 formed with bores to receive bolts are secured by welding to one side of the casing eterior along a line extending longitudinally of the casing. The blocks may initially be mounted onto an insert strip which can more readily be positioned centrally along the top of the casing. In this case, the blocks are tack welded in position and the insert strip removed before the blocks are fully welded around a chamfer provided on each block. Following welding, the casing is split from end to end by cutting centrally along the full length of the casing, completely separating the blocks 3 into two parts. Typically, a 0.125 inch (3.0mm) thick milling saw is employed. As the cutter passes between adjacent blocks, 3mm washers are positioned between the cut block halves and the two block halves drawn together by suitable bolts.

By looking through the casing from either end it will be possible for the operator to see the cutter when it is clear of the stator stack as great care must be taken to avoid damage to the stator windings. Once the initial longitudinal cut has been made, the original 3.0mm slot is taken down into the laminations to a depth of 5.5mm. During the second cut, the bolts extending through respective block halves are removed to allow the saw to pass and then replaced. On completion of the second cut, the bolts are slackened off and the stator removed by a sliding action.

Once a replacement stator has been positioned by sliding within the casing, a shim 4 having a thickness of approximately 0.117 inches is inserted into the milled slot and the bolts are tightened firmly to locate the replacement stator within the casing.

As indicated by reference numeral 5, portions of certain cooling fins 6 may need to be cut away to facilitate entry of the bolts within the drilled holes.

As will be seen from Figure 2 of the drawings, the depth of the initial cut through the casing extends through the casing wall and into the adjacent stator surface 7 to form a longitudinal groove 8 therein to receive the adjoining shim edge for positive location purposes. The lower end corners 9 of the shim are cut away for location purposes. Each shim corner edge 10 is preferably inclined as indicated at an angle approximating to 45°.

The blocks 3 may be formed of, for example, steel or aluminium and are preferably welded in place. Alternatively, however, one elongate block or a series of a number of blocks other than the four illustrated may be provided.

Once the casing has been converted in accordance with the foregoing description, in future failed stators can readily be removed from the casing merely be slackening off the bolts to separate the split edges of the casing.

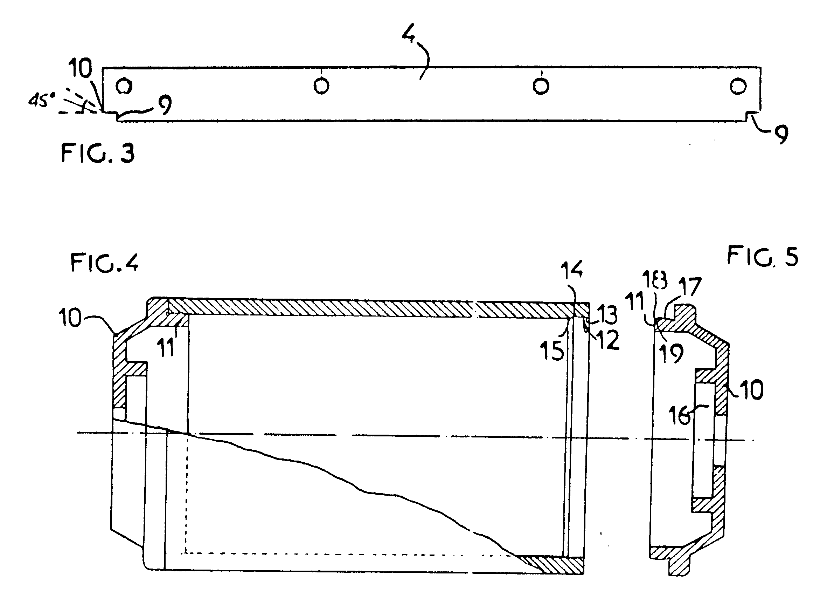

In the embodiment illustrated in Figures 4 and 5, the open ends of the casing 1 are closed by end covers 10. Each end cover 10 includes an annular spigot 11 which protrudes into one open end of the casing to make intimate contact with a mating surface 12 set in the internal periphery of the respective casing end. Each mating surface 12 is formed with an annular tapered surface 13 which inclines inwardly towards the open end of the casing. The taper angle may typically be of the order $3°$ or $5°$; however, other taper angles may be employed. The tapered surface 13 terminates in a step 14. Immediately inboard of each step 14, the internal casing surface is formed with an annular tapered length 15 inclined in an opposite sense to the surface 13. The taper angle of length 15 is again typically of the order of $3°$ or $5°$; however, other taper angles may be employed. The bearing housing of each end cover is indicated by reference numeral 16.

As will be seen from Figure 5, each end cover spigot 11 is formed with annular surfaces 17, 18 which are tapered in a complimentary sense to the tapered mating surfaces 13, 15 of the casing. A step 19 is positioned intermediate the surfaces 17, 18. Thus, when the end covers are assembled onto the casing (as illustrated on the left hand side of Figure 4), the surfaces 13, 15 are respectively in intimate contact with the surfaces 17, 18 with the respective step portions 14, 19 in abutting contact.

With the arrangement illustrated in Figures 4 and 5, the end covers 10 are drawn inwardly into the casing ends as the longitudinal split edges of the casing are drawn together, the inclined mating surfaces of the casing and each end cover sliding over one another.

It is to be understood that the foregoing is merely exemplary of electric motors in accordance with the invention and that modifications can readily be made thereto without departing from the true scope of the invention. Thus, the invention has application to electric motors which are formed initially with a split extending longitudinally of the casing, flanges being positioned along each split edge of the casing.

## Claims

1. A method of removing and replacing a stator from its operative position in substantial full surface contact with the internal surface of a casing of an electric motor, which method is characterised by the steps of securing to the casing exterior along a line extending longitudinally of the casing one or more protrusions of metallic material, splitting the casing by a cutting procedure along the aforesaid line thereby to cause the cut edges to separate to enable the stator to be released from the casing, locating a fresh or repaired stator within the casing, and re-assembling the casing by drawing the split edges together and securing the same firmly to locate the stator within the casing.

2. A method as claimed in Claim 1 characterised in that the split edges are secured by bolts or the like passing through bores formed in the or each protrusion.

3. A method as claimed in of Claim 1 or 2 characterised in that the stator is provided with electrical connections positioned within the casing which can readily be disconnected when the casing is removed.

4. A method as claimed in Claim 1 or Claim 2 characterised in that the stator is provided with electrical connections which slide into contact with the stator as the stator is moved fully into its operative position.

5. A method as claimed in any one of Claims 1 to 4 characterised in that the cylindrical casing is open ended and wherein these open ends are closed by means of end covers formed with annular spigots which protrude into and engage internal mating surfaces of the casing.

6. A method as claimed in Claim 5 characterised in that the mating surfaces of the casing each taper inwardly at a shallow angle towards the respective casing open end, the angle of incline preferably being of the order of between $3°$ and $5°$.

7. A method as claimed in Claim 6 characterised in that the mating face of the annular spigot of each end cover is formed with a taper complimentary to that of the respective casing end, the arrangement being such that as the longitudinally split edges of the casing are drawn together, so the end covers are drawn inwardly towards the casing interior firmly to secure the same.

8. An electric motor including a cylindrical casing which encompasses and lies substantially in full surface contact with a stator of the motor, the motor being characterised in that the casing is split along a line extending longitudinally of the casing, and in that the casing edges along this split line are selectively moved into contact or close proximity with one another to define a substantially closed cylinder or released from such contact or close proximity to facilitate access to the casing interior and/or components located therein.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DD-A-142775 (H.J.TISCHER) <br> * page 5, line 14 - page 6, line 18; figures 1a-2b * | 8 | H02K15/00 <br> H02K15/14 <br> H02K5/18 |
| A,D | EP-A-124973 (G.NEL) <br> * claims 1-3 * | 1, 3, 4 | |
| A | DE-C-645329 (SIEMENS-SCHUCKERTWERKE) <br> * page 1, lines 24 - 46; figure 1 * | 1, 2, 8 | |
| A | EP-A-48213 (SCHWEIZERISCHE ALUMINIUM) <br> * page 5, lines 17 - 21; figure 1 * | 1, 8 | |
| A | EP-A-305915 (LICENTIA) <br> * column 2, lines 40 - 42; figure 1 * | 5 | |
| A | DE-B-1022674 (LICENTIA) <br> * figure 3 * | 6, 7 | |

TECHNICAL FIELDS
SEARCHED (Int. Cl.5 )

H02K

The present search report has been drawn up for all claims

| Place of search | Date of completion of the search | Examiner |
|---|---|---|
| BERLIN | 10 AUGUST 1990 | LEOUFFRE, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)